# EUROPÄISCHE PATENTSCHRIFT

(11) **EP 1 474 625 B1**
(45) Veröffentlichungstag und Bekanntmachung des Hinweises auf die Patenterteilung: **02.05.2007**
(21) Anmeldenummer: 02806785.8
(22) Anmeldetag: 11.11.2002
(51) Int. Cl.: F16K 17/16

(54) **BERSTEINSATZ**
RUPTURE INSERT
GARNITURE DE RUPTURE

(30) Priorität: 13.02.2002 DE 10206089
(43) Veröffentlichungstag der Anmeldung: 10.11.2004
(73) Patentinhaber: Zimmer Aktiengesellschaft, 60388 Frankfurt am Main (DE)
(72) Erfinder: ZIKELI, Stefan, A-4844 Regau (AT); ECKER, Friedrich, 4850 Timelkam (AT)
(74) Vertreter: Grünecker, Kinkeldey, Stockmair & Schwanhäusser Anwaltssozietät
(86) Internationale Anmeldenummer: PCT/EP2002/012595
(87) Internationale Veröffentlichungsnummer: WO 2003/069200

(56) Entgegenhaltungen:
- WO-A-94/08162
- DE-U- 29 504 127
- US-A- 4 219 040
- US-B1- 6 173 767

## Beschreibung

Die Erfindung betrifft einen Bersteinsatz zum Einbau in ein Rohrleitungs- bzw. Apparatesystem für den Transport eines spontan exotherm reagierenden Fluids, wie eines synthetischen Polymers oder einer Polymerlösung, eines Cellulosederivats oder einer Lösung aus Cellulose, Wasser und Aminoxid sowie Mischungen davon, mit einer Wand, die ein vom Fluid in einer Durchleitungsrichtung durchströmtes Durchleitungsvolumen wenigstens teilweise außen umgibt, mit einer aus dem Durchleitungsvolumen führenden Druckableitung, und mit einem die Druckableitung gegenüber dem Durchleitungsvolumen verschließenden Berstkörper, der bei Überschreiten eines vorbestimmten Berstdruckes in einem Zustand überführbar ist, in dem das Durchleitungsvolumen und die Druckableitung fluidleitend miteinander verbunden sind.

Derartige Rohrleitungs- und Apparatesysteme werden herkömmlicherweise bei Spinn- bzw. Extrusionsanlagen eingesetzt, bei denen das Fluid die zu verspinnende Formmasse bildet. Durch das Rohrleitungssystem wird das Fluid von einem Reaktionsbehälter, indem es aus seinen einzelnen Bestandteilen zusammengemischt wird, im Regelfall zu einer Spinndüse bzw. Extrusionsvorrichtung transportiert, durch die es zu Formkörpern geformt, beispielsweise versponnen oder extrudiert, wird. Zu den Rohrleitungssystemen gehören im allgemeinen auch weitere Apparate wie Pumpen, Druckausgleichsbehälter, Siebanlagen, oder Heizvorrichtungen.

Die bei Spinnanlagen verwendeten Fluide sind wärmesensitiv und neigen zu einer spontanen exothermen Reaktion, wenn im Fluidleitungsstück eine bestimmte Höchsttemperatur überschritten wird. Eine exotherme Reaktion kann auch unterhalb der Höchsttemperatur auftreten, wenn das Fluid zu lange gelagert wird, was beispielsweise in Totwassergebieten häufig auftritt.

Als ein für den eingangs genannten Bersteinsatzes besonders geeignetes Fluid dient eine verspinnbare Formmasse, insbesondere eine Spinnlösung enthaltend Cellulose, Wasser und tertiäres Aminoxid, beispielsweise N-Methylmorpholin-N-oxid (NMMNO) sowie Stabilisatoren zur thermischen Stabilisierung der Cellulose und des Lösungsmittels sowie gegebenenfalls weitere Additive, wie z.B. Titandioxid, Bariumsulfat, Grafit, Carboxymethylcellulosen, Polyethylenglycole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Russe oder elektrisch leitfähige Russe, Kieselsäure, organische Lösungsmittel als Verdünnungsmittel etc.
Bei einer spontanen exothermen Reaktion im Fluid entsteht ein hoher Reaktionsdruck, der die Spinnanlage, insbesondere Pumpen, Fluidleitungsstücke, Wärmetauscher oder Druckausgleichsbehälter beschädigen kann.

Im Stand der Technik ist es daher bekannt, für den Fall einer spontanen exothermen Reaktion Berstschutzeinrichtungen im Rohrleitungssystem vorzusehen, deren Aufgabe es ist, den Reaktionsdruck möglichst schnell abzubauen und so weitere Beschädigungen durch den Reaktionsdruck an teuren Geräten zu vermeiden.

So sind beispielsweise die Berstschutzeinrichtungen der EP 0 626 198 A1, der WO 94/08162 und der WO 99/00185 mit einer Druckableitung versehen, die im normalen Betrieb verschlossen ist. Wird ein vorbestimmter Berstdruck, der meist unterhalb des bei einer spontanen exothermen Reaktion entstehenden Reaktionsdruckes liegt, überschritten, so nimmt die Berstschutzeinrichtung einen Zustand ein, in dem die Druckableitung mit dem Durchleitungsvolumen des Rohrleitungssystems für das Fluid verbunden ist. Durch das im Berstfall nun zusätzlich zur Verfügung stehende Volumen bzw. durch die Druckableitung kann der Reaktionsdruck im Leitungssystem abgebaut und eine Beschädigung von teuren Geräten vermieden werden.

Ein System mit den eingangs genannten Merkmalen ist aus der EP 0 662 204 B1 bekannt. Das dort beschriebene Rohr ist mit einer Überdruckentlastungsvorrichtung versehen, deren Oberfläche allerdings in einer Abzweigung befestigt ist. Dabei ist die unter Druck verlagerbare Oberfläche der Überdruckentlastungsvorrichtung im Wesentlichen mit der Innenseite der Wand des Rohres bündig, um eine Ablagerung des Fluids auf der Oberfläche zu vermeiden. Die Überdruckentlastungsvorrichtung der EP 0 662 204 B1 ist als eine Berstscheibe ausgestaltet, die an einem Ende eines in der Abzweigung eingesetzten Einsatz montiert ist. Die Abzweigung selbst wird von der Wand des Rohrleistungssystems gebildet.

Nachteilig bei der Vorrichtung der EP 0 662 204 B1 ist allerdings die aufwändige Art, mit der die Berstscheibe ausgetauscht werden muss. Bei der Vorrichtung der EP 0 662 204 B1 muss bei einem Wechsel der Berstscheibe die sich an die Berstvorrichtung anschließende Druckableitung demontiert werden. Damit die Berstscheibe bündig mit der Innenwand abschließt, ist eine genaue und aufwändige Fertigung der Berstscheibe und des Einsatzes mit genauen Toleranzen notwendig. So muss die Länge des Einsatzes bei aufgebrachter Berstscheibe die Flucht der Berstscheibe mit der Innenwand ermöglichen. Außerdem muss der Einsatz dichtend in der Abzweigung angebracht werden.

Ein weiterer Nachteil der Vorrichtung der EP 0 662 204 B1 liegt darin, dass ein nur sehr beschränkter Zugang zum Inneren des Rohres beispielsweise zu Inspektions- oder Reinigungszwecken möglich ist. Schließlich besteht ein weiterer Nachteil der Vorrichtung der EP 0 662 204 B1 darin, dass durch die Abzweigung und die Berstscheibe ein Teil der Wandfläche des Rohres nicht mehr beheizt werden kann. Dies ist vor allem dann problematisch, wenn aufgrund eines großen Abstandes zwischen den einzelnen Berstscheiben in Durchleitungsrichtung des Fluids durch das Rohr besonders große Berstscheiben und/oder Abzweige mit großem Durchmesser verwendet werden müssen.

Der zuletzt genannte Nachteil der Vorrichtung der EP 0 662 204 B1 wird durch die Weiterentwicklung gemäß der EP 0 789 822 B1 vermieden. Bei der Vorrichtung der EP 0 789 822 B1 ist eine Sollbruchstelle, die bei Erreichen des Überdruckes in einer Rohrleitung bricht, im Inneren der Rohrleitung vorgesehen und nicht Teil der Innenwand. Ziel dieser Vorrichtung ist es, die Verwendung möglichst kleiner Berstscheiben zu ermöglichen, die möglichst wenig Wandfläche der Rohrwand in Anspruch nehmen und die Beheizung der durch die Rohrleitung durchgeleiteten Masse durch die Wand möglichst wenig beeinflussen. Ein weiteres Merkmal der Vorrichtung der EP 0 789 822 B1 ist, dass die Berstscheibe keinesfalls in Strömungsrichtung positioniert ist.

Bei der Vorrichtung der EP 0 789 822 B1 ist jedoch nach wie vor der sehr aufwändige Aufbau der Vorrichtung von Nachteil. Außerdem muss die Ableitung des Druckes von der Sollbruchstelle im Inneren der Strömung durch die Innenwand durch ein in das Fluid ragende Rohr erfolgen. Selbst wenn das Rohr nur geringfügig in die Strömung hineinragt, bildet das Rohr zur Druckableitung ein Strömungshindernis, das insbesondere bei den üblicherweise hochviskosen Fluiden zu Totwassergebieten und zu Verklumpungen und damit zu spontanen exothermen Reaktionen führen kann. Außerdem ist wegen des kleinen Durchmessers der Berstscheibe eine Inspektion des Rohrinneren erschwert.

Angesichts dieser Nachteile ist es eine Aufgabe der Erfindung, den eingangs genannten Bersteinsatz so zu verbessern, dass mit konstruktiv einfachen Mitteln eine Inspektion des Rohrinneren an der Stelle des Bersteinsatzes möglich ist.

Diese Aufgabe wird erfindungsgemäß für einen Bersteinsatz der eingangs genannten Art dadurch gelöst, dass der Bersteinsatz als ein zum Austausch des Berstkörpers wiederholt in das Rohrleitungssystem ein- und ausbaubares Rohrleitungsmodul ausgestaltet ist, dass die Druckableitung im Wesentlichen als eine in der Wand ausgebildete Öffnung ausgestaltet ist und dass der Berstkörper lösbar an der Innenfläche der Wand angebracht ist.

Im Gegensatz zu dem im Stand der Technik verfolgten Lösungen geht die konstruktiv einfache Lösung gemäß der Erfindung dahin, einen schnell austauschbaren bzw. ein- und ausbaubaren Bersteinsatz zu schaffen, der mitsamt wenigstens eines Teiles der Wand und dem Berstkörper als Modul aus dem Rohrleitungssystem genommen werden kann. An der Stelle, an der der Bersteinsatz mitsamt der das Durchleitungsvolumen umgehenden Wand ausgebaut ist, kann das Innere des Rohrleitungssystems einfach inspiziert werden.

Außerdem ist durch die erfindungemäße Lösung ein Austausch des Berstkörpers außerhalb der Rohrleitung möglich. Dadurch können auch komplex ausgestaltete Berstkörper mit einfachen Maßnahmen, wie z. B. Anschweißen oder Anlöten, verwendet werden.

Um den Bersteinsatz konstruktiv einfach zu halten, ist die Druckableitung insbesondere als eine im Wesentlichen in der Wand ausgebildete Öffnung ausgestaltet. Bei dieser Ausgestaltung ist ein besonders einfacher Verschluss der Druckabteilung möglich.

Durch die Ausgestaltung des Bersteinsatzes als zum Austausch des Berstkörpers wiederholt ein- und ausbaubares Rohrleitungsmodul ist es gemäß einer besonders vorteilhaften Ausgestaltung möglich, den Berstkörper von innen an der Wand des Durchleitungsvolumens zu befestigen. Eine derartige Ausgestaltung ist beispielsweise bei den Vorrichtungen der EP 0 662 204 B1 und der EP 0 789 822 B1 nicht möglich, da dort wegen des stets stationär verbleibenden Rohrleitungssystems ein Zugriff auf das Rohrinnere lediglich durch die Druckableitung möglich ist. Bei den herkömmlichen Vorrichtungen können somit keine Berstkörper in das Rohrleitungssystem eingebracht werden, die größer als die Druckableitung sind.

Durch die Anbringung des Berstkörpers von innen an der Wand des Durchleitungsvolumens und aufgrund der Möglichkeit, den Berstkörper bei ausgebautem Bersteinsatz zu montieren, ist eine besonders genaue Positionierung des Berstkörpers mit hohen Qualitätsstandards möglich. Dadurch kann der Berstdruck genau eingehalten werden.

Der Berstkörper kann insbesondere in einem die Druckableitung umgebenden Bereich der Wand direkt an der Wand befestigt sein und muss nicht, wie bei der Vorrichtung der EP 0 662 264 B1 über komplizierte Einsätze im Abzweig angebracht werden. Auch diese vorteilhafte Maßnahme führt zu einer exakteren Befestigung des Berstkörpers, der somit den Berstdruck exakter einhalten kann.

Durch die Ausbaubarkeit des Bersteinsatzes bzw. Berstmoduls kann die Grundfläche des Berstkörpers größer sein als der Strömungsquerschnitt der Druckableitung. Bei dieser Ausgestaltung wirkt der Druck im Rohrleitungssystem so auf den Berstkörper, dass dieser gegen die Wand gedrückt wird und ohne besonders aufwändige Befestigungsmaßnahmen sicher an der Wand hält. Durch die direkte Befestigung des Berstkörpers an der Wand fallen die im Stand der Technik vorhandenen Totraumzonen und Spalte zwischen dem Außendurchmesser des Bersteinsatzes und dem Innendurchmesser des Rohrabzweigs vollständig weg.

Der Berstkörper kann insbesondere als eine Berstscheibe ausgestaltet sein, die entweder plan oder gewölbt ist. Bei einer gewölbt ausgestalteten Berstscheibe ist es von Vorteil, wenn die Wölbung in Richtung Druckableitung gewölbt ist, da hierdurch der Berstdruck genauer einzuhalten und die Spannungsverteilung in der Berstscheibe günstiger ist.

Um Totwassergebiete zu vermeiden, kann der Berstkörper zumindest abschnittsweise mit der Wand im Wesentlichen fluchten und/oder einen Teil der das Durchleitungsvolumen begrenzenden Wand bilden.

Um die Montage des Berstkörpers, beispielsweise durch Anschweißen, Anlöten oder Ankleben, aber auch durch Anschrauben, zu erleichtern, kann gemäß einer vorteilhaften Ausgestaltung die Wand im Bereich der Öffnung einen in das Fluid ragenden Ansatz ausbilden, auf dem die Berstscheibe angebracht ist.

Insbesondere kann der Ansatz eine im Wesentlichen plane Auflagefläche für den Berstkörper ausbilden, was die Montage und die Geometrie der Berstkörper nochmals vereinfacht.

Um Ablagerungen im Bereich des Bersteinsatzes zu vermeiden, kann der Strömungsquerschnitt des Durchleitungsvolumens in einer weiteren vorteilhaften Ausgestaltung im Bereich der Berstscheibe verringert sein. Insbesondere bei Verwendung eines Ansatzes zur Montage des Berstkörpers kann sich der Strömungsquerschnitt im Bersteinsatz zum Ansatz hin kontinuierlich auf strömungsgünstige Weise verringern.

Durch die Verringerung des Strömungsquerschnittes findet eine Beschleunigung des Fluids statt, so dass eventuelle Verklumpungen an der Wand mitgerissen werden. Folglich kann selbst bei einer nicht fluchtenden Anordnung der Berstscheibe mit der Wand durch diese Maßnahme eine Verklumpung des Fluids aufgrund der erhöhten Strömungsgeschwindigkeit vermieden werden.

Um Probleme bei der Beheizung des Fluids zu vermeiden, wie sie aufgrund des vorzugsweise nicht beheizten Berstkörpers an der Wand entstehen können, kann ein Zentralkörper im Bereich der Mittenströmung des Fluids im Durchleitungsvolumen vorgesehen sein, durch den die Mittenströmung des Fluids ersetzt wird. Dieser Zentralkörper kann zur Heizung des Fluids eingesetzt werden, oder aber auch nur zur Verringerung des Strömungsquerschnitts im Bereich der Berstscheibe, um Ablagerungen zu vermeiden.

Insbesondere bei einer Verwendung des Zentralkörpers als ein zusätzliches Heizsystem kann der Zentralkörper als ein Fluidleitungssystem ausgestaltet sein, durch das ein zweites Fluid, beispielsweise ein Heizfluid mit vorbestimmter und/oder regelbarer Temperatur, getrennt vom ersten Fluid durchleitbar ist. Vorzugsweise findet eine solche Durchleitung im Gegenstrom, d.h. in entgegengesetzter Richtung zur Durchströmung des Rohrleitungssystems statt.

Von ebenfalls besonderem Vorteil ist es, wenn der Bersteinsatz zum Austausch des Berstkörpers leicht handhabbar ist. Eine leichte Handhabung ist insbesondere dann möglich, wenn die Abmessungen und das Gewicht des Bersteinsatzes so gering wie möglich sind. Dies kann insbesondere dadurch erreicht werden, dass die Länge des Bersteinsatzes in Durchleitungsrichtung kleiner ist als der Durchmesser des Durchleitungsvolumens. Damit kann der als Berstmodul ausgebildete Bersteinsatz im Wesentlichen flansch- oder scheibenförmig ausgestaltet sein. Beispielsweise kann die Länge des Bersteinsatzes in Durchleitungsrichtung höchstens dem dreifachen Durchmesser des Berstkörpers oder der Druckableitung entsprechen.

Der erfindungsgemäße Bersteinsatz muss sich nicht über den gesamten Querschnitt des Durchleitungsvolumens erstrecken, sondern kann in einer quer zur Durchleitungsrichtung verlaufenden Ebene teilbar ausgestaltet sein, also lediglich einen Teil der Wand des Durchleitungsvolumens umfassen. Bei dieser vorteilhaften Weiterbildung muss bei einem Ausbau des Bersteinsatzes nur ein Teil der Rohrwand, beispielsweise lediglich die obere Hälfte des Bersteinsatzes oder die obere Hälfte eines Abschnittes des Rohrleitungssystems zur Erneuerung eines Berstkörpers entfernt werden. Wesentlich ist jedoch dabei, dass ein Teil der die Druckableitung umgebenden Wand des Durchleitungsvolumens mitausbaubar ausgestaltet ist, so dass eine Anbringung des Berstkörpers von innen bzw. die Verwendung von Berstkörpern mit größeren Abmessungen als der lichte Durchmesser der Druckableitung möglich ist.

So kann der Bersteinsatz als ein lediglich einen Teil des Durchleitungsvolumens eines Rohrleitungsstückes des Rohrleitungssystems umgebender, in einer Richtung quer zur Durchleitungsrichtung auf das Rohrleitungsstück aufsetzbarer Rohrabschnitt ausgestaltet sein.

Schließlich umfasst die Erfindung auch ein modulares Rohrleitungssystem, das wenigstens ein Rohrleitungsstück sowie einen Bersteinsatz nach einer der obigen Ausgestaltungen aufweist.

Bei einem derartigen modularen Rohrleitungssystem ist es von Vorteil, wenn die Durchleitungsvolumina des wenigstens einen Rohrleitungsstückes und des Bersteinsatzes bzw. die diesen Durchleitungsvolumina zugeordneten Wände im zusammengesetzten Zustand im Wesentlichen stoßfrei und kontinuierlich ineinander übergehen, so dass keine Kanten entstehen. Auf diese Weise können Toträume und somit die dort entstehenden Verklumpungen vermieden werden.

Das Rohrleitungssystem kann des Weiteren mit einem Zentralkörper versehen sein, der sich im Bereich des Bersteinsatzes fortsetzt und der entweder Teil des Bersteinsatzes ist, oder der von der Wand des Bersteinsatzes zumindest abschnittsweise umgeben ist.

Zur leichten Erweiterbarkeit des modularen Rohrleitungssystems können das wenigstens eine Rohrleitungsstück und der Bersteinsatz an ihren in Durchleitungsrichtung gelegenen Enden mit einander entsprechend ausgestalteten Flanschen versehen sein. Der Vorteil dieser Ausgestaltung liegt darin, dass die Rohrleitungsstücke und Bersteinsätze beliebig miteinander kombiniert werden können und an die entsprechenden Bedürfnisse der Anlage angepasst werden können.

Bei einer spontanen exothermen Reaktion entstehen Abfallprodukte, die fest, flüssig oder gasförmig sein können. Diese Abfallprodukte werden im Berstfall durch die Druckableitung nach außen abgeführt. In diesem Zusammenhang ist es von Vorteil, wenn in einer weiteren Ausgestaltung diese Abfallprodukte weiteren Anlagen zugeführt werden, die an die Druckableitung angeschlossen sind und die das durch die Druckableitung tretende Fluid reinigen und die Abfallprodukte vom Fluid trennen. Insbesondere kann auch eine Gasreinigungsanlage an die Druckableitung angeschlossen sein.

Die im Berstfall entstehenden festen, flüssigen oder gasförmigen Stoffe können Abfall- bzw. Reinigungsanlagen insbesondere auch Gasreinigungsanlagen zugeführt werden.

Im Folgenden werden der Aufbau und die Funktion eines erfindungsgemäßen Bersteinsatzes anhand von Ausführungsbeispielen unter Bezug auf die Zeichnungen beispielhaft erläutert. Dabei können, für einen Fachmann klar ersichtlich, die Merkmale der einzelnen Ausführungsbeispiele beliebig miteinander kombiniert werden.

Es zeigen:
- Fig. 1A: ein erstes Ausführungsbeispiel eines erfindungsgemäßen Bersteinsatzes im Längsschnitt;
- Fig. 1B: eine Ansicht des Bersteinsatzes der Fig. 1A entlang der Linie IB-IB der Fig. 1 A;
- Fig. 2A: ein zweites Ausführungsbeispiel eines erfindungsgemäßen Bersteinsatzes in einem Längsschnitt;
- Fig. 2B: den Bersteinsatz der Fig. 2A in einem Schnitt entlang der Linie IIB-IIB;
- Fig. 3A: eine erste Variante zur Anbringung eines Berstkörpers an einem erfindungsgemäßen Bersteinsatz;
- Fig. 3B: eine zweite Variante zur Anbringung eines Berstkörpers an einem erfindungsgemäßen Bersteinsatz;
- Fig. 3C: eine dritte Variante zur Anbringung eines Berstkörpers an einem erfindungsgemäßen Bersteinsatz;
- Fig. 3D: die Variante der Fig. 3C in einem Schnitt entlang der Linie IIID-IIID;
- Fig. 4: ein drittes Ausführungsbeispiel eines erfindungsgemäßen Bersteinsatzes;
- Fig. 5: ein viertes Ausführungsbeispiel eines erfindungsgemäßen Bersteinsatzes; und
- Fig. 6: ein fünftes Ausführungsbeispiel eines erfindungsgemäßen Bersteinsatzes.

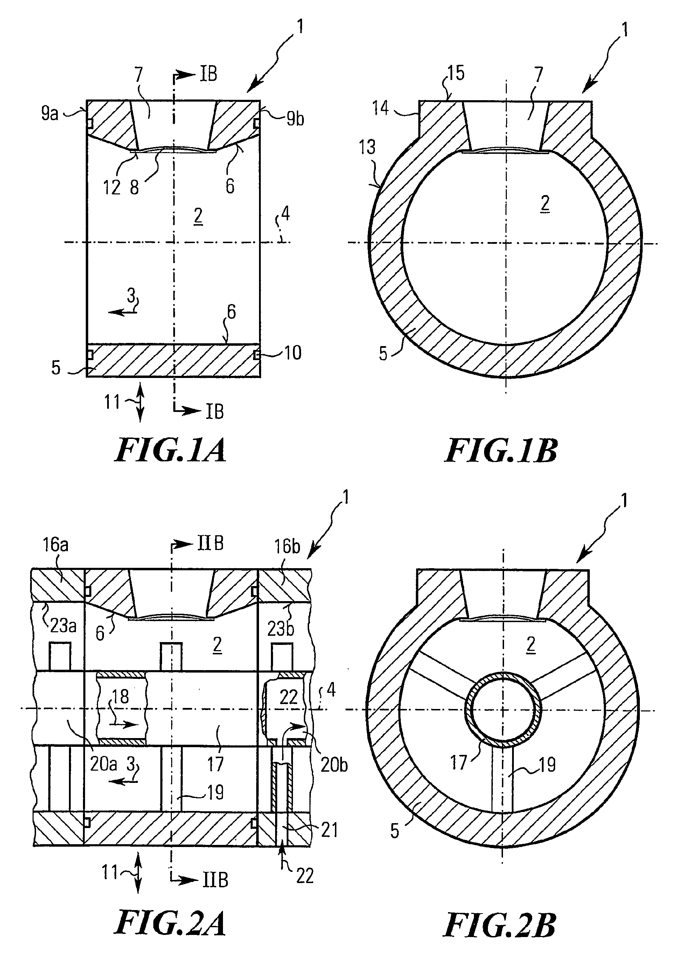

Zunächst wird der Aufbau eines erfindungsgemäßen Bersteinsatzes beispielhaft anhand des Ausführungsbeispiel der Fig. 1A erläutert.

Gemäß Fig. 1A weist ein erfindungsgemäßer Bersteinsatz 1, der aufgrund seines modulartigen Aufbaus auch als Berstmodul bezeichnet werden kann, ein Durchleitungsvolumen 2 auf, das von einem Fluid (kein Bezugszeichen) in einer Durchströmungsrichtung 3, im Wesentlichen entlang einer Mittenachse 4, durchströmt ist. Das Durchleitungsvolumen 2 erstreckt sich durch das gesamte Rohrleitungssystem (in Fig. 1A nicht dargestellt) und wird im Bereich des Bersteinsatzes 1 von einer Wand 5 mit einer zum Durchleitungsvolumen 2 weisenden Innenfläche 6 begrenzt.

In der Wand ist eine als Öffnung in der Wand ausgestaltete Druckableitung 7 vorgesehen, die vom Durchleitungsvolumen 2 wegführt und durch einen Berstkörper 8 gegenüber dem Durchleitungsvolumen 2 druckdicht verschlossen ist. Die Druckableitung 7 kann einen runden Querschnitt aufweisen. An den in Durchströmungsrichtung 3 gelegenen Enden weist der Bersteinsatz 1 Anschlagflächen 9a, 9b auf, die dichtend in Eingriff mit entsprechenden Gegenflächen des nicht dargestellten Rohrleitungssystems in Eingriff bringbar sind. Die Anschlagflächen können Zentrierflächen aufweisen und mit einer Dichtungsaufnahme 10 versehen sein. Im Bereich der Anschlagflächen können außerdem Flansche (in Fig. 1A nicht dargestellt) vorgesehen sein, die den im Rohrleitungssystem standardmäßig verwendeten Flanschen (DIN, ASME, etc.) entsprechen, so dass der Bersteinsatz an jeder Stelle des Rohrleitungssystems modulartig einbaubar ist.

Die Anschlagflächen 9a, 9b und die Abdichtung der Anschlagflächen 10 ist so ausgebildet, dass eine Entnahme des Bersteinsatzes 1 quer zur Durchleitungsrichtung 3 bzw. Mittenachse 4, wie durch den Doppelpfeil 11 angedeutet, möglich ist, ohne dass am Rohrleitungssystem etwas verändert werden muss.

Wie in Fig. 1A zu erkennen ist, ist der Berstkörper 8 auf einer im Wesentlichen planen Auflagefläche 12 aufliegend auf der Innenfläche 6 der Wand 5 von innen angebracht. Der Berstkörper 8 kann form- oder materialschlüssig mit der Wand 5 verbunden sein.

Die Auflagefläche 12 ist im Wesentlichen plan und wird durch einen Absatz oder Ansatz 12a gebildet, der sich durch eine Erhöhung der Wanddicke der Wand 5 zur Auflagefläche 12 bzw. Druckableitung 7 hin bildet.

Durch die Zunahme der Wandstärke zur Druckableitung 7 hin verringert sich der Strömungsquerschnitt des Bersteinsatzes; der Strömungsquerschnitt ist somit im Bereich des Berstkörpers am kleinsten.

Wie in der Fig. 1A weiter zu erkennen ist, bildet die dem Durchleitungsvolumen 2 zugewandte Innenfläche des Berstkörpers 8 einen Teil der Innenwand des Bersteinsatzes aus.

Der Berstkörper 8 der Fig. 1A ist als eine Berstscheibe ausgestaltet, die eine in die Druckableitung 7 ragende Kalottenfläche ausbildet. An dem auf der Auflage 12 aufliegenden Rändern ist der Berstkörper 8 plan.

Fig. 1B zeigt das Ausführungsbeispiel der Fig. 1A in einem Schnitt entlang der Linie IB-IB, d.h. in der Mittenebene quer zur Durchleitungsrichtung 3.

Wie in der Fig. 1 B zu erkennen ist, bildet der Bersteinsatz 1 einen im wesentlichen hohlzylindrischen Rohrabschnitt, dessen Länge in Durchleitungsrichtung 3 des Fluids kleiner ist als der Durchmesser des Durchleitungsvolumens 2. Insbesondere kann die Länge des Bersteinsatzes 1 in Durchleitungsrichtung 3 bzw. Mittenrichtung 4 höchstens das Dreifache, bevorzugt höchstens das Doppelte des Durchmessers des Berstkörpers 8 bzw. der Druckableitung 7 betragen, um möglichst leichtgewichtig und damit leicht handhabbar zu sein.

Wie in Fig. 1 B gezeigt ist, ist an der Außenfläche 13 der Wand 5 des Bersteinsatzes 1 im Bereich der Druckableitung 7 ein Aufsatz 14 ausgebildet, der als Montagehilfe für Leitungssysteme dient, die mit der Druckableitung 7 verbunden werden. Durch diese (nicht dargestellten) Leitungssysteme kann im Berstfall das Fluid abgeleitet und bestimmten Verarbeitungsschritten zugeführt werden.

Der Aufsatz 14 kann eine im Wesentlichen plane Dichtfläche 15 ausbilden. Die Druckableitung 7 kann sich, wie in den Fig. 1 A und 1 B dargestellt, nach außen hin weiten.

In Fig. 2A ist ein zweites Ausführungsbeispiel eines erfindungsgemäßen Bersteinsatzes bzw. -moduls 1 in einem montierten Zustand zwischen zwei Rohrleitungsstücken 16a, 16b des Rohrleitungssystems gezeigt.

Für die Fig. 2A, wie auch für die weiteren nachfolgenden Figuren und Ausführungsbeispiele werden für ähnliche oder gleiche Bauelemente und Bestandteile des Bersteinsatzes, wie sie bereits aus dem Ausführungsbeispiel der Fig. 1A und 1B bekannt sind, im Folgenden die gleichen Bezugszeichen verwendet. Der Einfachheit halber wird außerdem bei der Beschreibung der nachfolgenden Ausführungsbeispiele lediglich auf die Unterschiede zwischen den Ausführungsbeispielen eingegangen.

Das Ausführungsbeispiel der Fig. 2A unterscheidet sich im Wesentlichen vom Ausführungsbeispiel der Fig. 1A durch einen im Durchleitungsvolumen 2 angebrachten Zentralkörper 17. Der Zentralkörper 17 erstreckt sich in Durchleitungsrichtung 3 um den Bereich der Mittenachse 4 anstelle der ansonsten hier herrschenden Mittenströmung des Fluids.

Der Zentralkörper 17 ist als ein Rohr ausgestaltet, das getrennt vom Fluid im Durchleitungsvolumen 2 in einer Richtung 18 durchströmt wird. Wie in der Fig. 2A zu erkennen ist, ist die Strömungsrichtung 18 im Zentralkörper 17 entgegengesetzt der Durchströmungsrichtung 3 im Rohrleitungssystem.

Das im Zentralkörper 17 strömende Fluid kann zur Beheizung des Fluids im Durchleitungsvolumen 2 verwendet werden. Eine Vermischung der Fluide im Durchleitungsvolumen 2 einerseits und im Zentralkörper 17 andererseits ist ausgeschlossen.

Der Zentralkörper 17 wird über strömungstechnisch günstig ausgestaltete Abstandshalter 19 in seiner Mittenposition gehalten. Der Querschnitt der Abstandshalter 19 in Durchströmungsrichtung ist so gehalten, dass keine Totwassergebiete stromab der Abstandshalter 19 entstehen.

Wie in Fig. 2A zu erkennen ist, weisen auch die Rohrleitungsstücke 16a und 16b Zentralkörper 20a, 20b auf, die sich nahtlos an den Zentralkörper 17 des Bersteinsatzes 1 anschließen. Insbesondere sind die Zentralkörper 17, 20a, 20b dicht so miteinander verbunden, dass eine durchgängige Rohrleitung entsteht.

In einer alternativen Ausgestaltung können der Zentralkörper 17 des Bersteinsatzes nicht von einem Fluid durchströmt sein und die Zentralkörper 20a und 20b der Rohrleitungsstücke 16a, 16b nahe der Verbindungsstelle mit dem Zentralkörper 17 eine Fluidzuleitung 21 aufweisen, durch die in Richtung der Pfeile 22 Heizfluid in die jeweiligen Zentralkörper 20b, 20a geleitet wird. Bei dieser Ausgestaltung dient der Zentralkörper 17 lediglich als Dummy, der einen strömungstechnisch günstigen Übergang zwischen den Zentralkörpern 20a, 20b ermöglicht.

Wie weiter in der Fig. 2A zu erkennen ist, ist der Übergang zwischen den Zentralkörpern 17, 20a, 20b sowie zwischen den Innenwänden 23a, 23b und der Innenwand 6 des Bersteinsatzes 1 der Übergang im Wesentlichen stoßfrei bzw. nahtlos.

Schließlich ist in der Fig. 1 noch zu erkennen, dass der Bersteinsatz 1 so ausgestaltet ist, dass er in Richtung des Doppelpfeiles 11 bei im wesentlich unveränderten Rohrleitungssystem ein- bzw. ausbaubar ist.

Fig. 2B zeigt eine Ansicht des Ausführungsbeispiels der Fig. 2A im Schnitt entlang der Linie IIB-IIB der Fig. 2A.

In Fig. 2B ist zu erkennen, dass der Zentralkörper 17 als ein Rohr ausgestaltet ist, das konzentrisch zur Wand 5, die einen Rohrabschnitt ausbildet, verläuft. Weiter ist in der Fig. 2B zu erkennen, dass drei im gleichen Winkel voneinander beabstandete Abstandshalter 19 am Zentralkörper 17 vorgesehen sind. Der Querschnitt der Abstandshalter 19 ist strömungstechnisch so optimiert, dass im Nachlauf der Abstandshalter 19 keine Totwassergebiete auftreten.

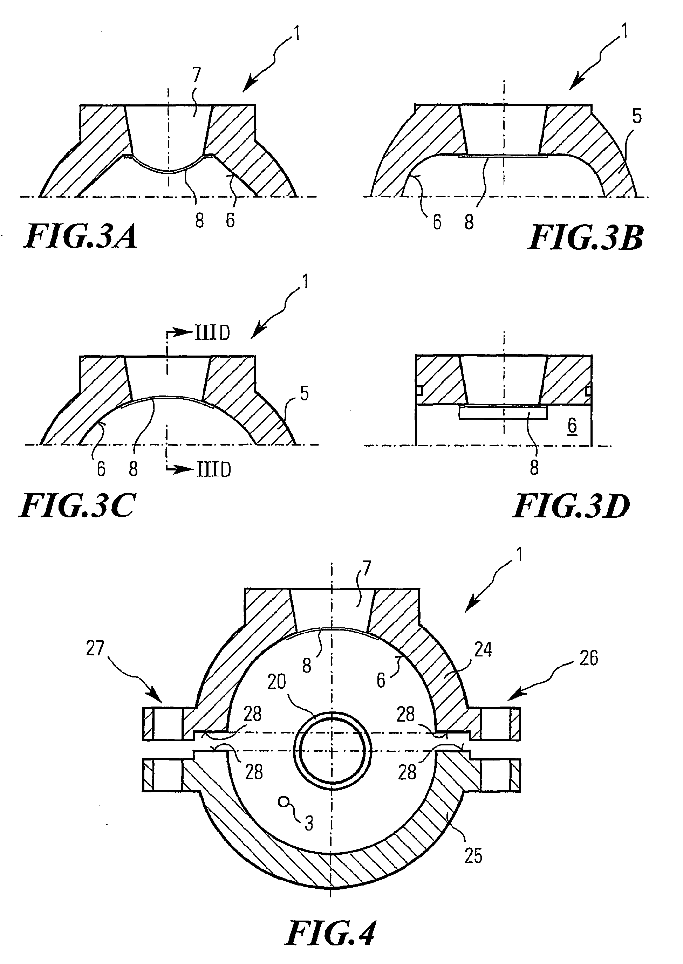

In Fig. 3A ist eine erste Variante eines Berstkörpers 8 des Bersteinsatzes 1 dargestellt.

Im Gegensatz zum Ausführungsbeispiel der Fig. 1A bis 2B ist der Berstkörper 8 lediglich gewölbt und nicht als Kalotte ausgestaltet. Außerdem ist die Wölbung von der Druckableitung 7 weg gerichtet.

In Fig. 3B ist eine weitere Variante eines als Berstscheibe ausgebildeten Berstkörpers 8 dargestellt. Der Berstkörper 8 ist als eine im Wesentlichen plane Scheibe ausgebildet, die an ihren Rändern mit der Wand 5 des Bersteinsatzes 1 verlötet ist.

In Fig. 3C ist eine dritte Variante einer Berstscheibe 8 des Bersteinsatzes 1 gezeigt. Fig. 3D zeigt eine Ansicht entlang der Linie IIID-IIID der Fig. 3C.

Wie anhand der Fig. 3C und 3D zu erkennen ist, ist die Berstscheibe 8 bogenförmig als Abschnitt einer Zylindermantelfläche gekrümmt, so dass sie im Bereich der Durchleitungsöffnung 7 eine Fortsetzung der Innenfläche 6 der Wand 5 bildet. Wie insbesondere anhand der Fig. 3D zu erkennen ist, ist bei dieser Variante keine Verringerung des Strömungsquerschnitts vorhanden.

Bei sämtlichen Varianten der Fig. 3A bis 3D ist der Berstkörper 8 von innen an der Innenfläche 6 der Wand 5 befestigt und bildet einen Teil der Innenwand.

In Fig. 4 ist ein drittes Ausführungsbeispiel eines erfindungsgemäßen Bersteinsatzes gezeigt, der in einer Ebene quer zur Durchleitungsrichtung 3 geteilt ist. Insbesondere weist der Bersteinsatz 1 gemäß dem Ausführungsbeispiel der Fig. 4 ein erstes Teil 24 und ein zweites Teil 25 auf, die mittels zweier, sich in Durchleitungsrichtung 3 zu beiden Seiten der Bersteinrichtung 1 erstreckender Flansche 26, 27 druck- und fluiddicht zusammengehalten werden. Hierzu sind die beiden Teilen 24, 25 an den zueinander weisenden Flächen mit Dichtflächen 26 versehen. Das zweite Teil 25 kann dem Rohrleitungssystem zugeordnet und fest mit dem Rohrleitungssystem verbunden sein.

Das Ausführungsbeispiel der Fig. 4 kann insbesondere dann verwendet werden, wenn die zu beiden Seiten des Bersteinsatzes liegenden Rohrleitungsstücke 16a, 16b (in Fig. 4 nicht dargestellt) einen einzigen, durchgängigen Zentralkörper 20 aufweisen, der nicht Bestandteil des Bersteinsatzes ist, um den herum sich die Berstschutzeinrichtung 1 befindet.

Beim Ausführungsbeispiel der Fig. 4 muss lediglich der eine Teil 24 durch Lösen von Befestigungsmitteln an den Flanschen 26, 27 vom zweiten Teil 25 abgenommen werden. Der Zentralkörper 20 des Rohrleitungssystems kann dabei unverändert bleiben.

Von Vorteil ist es dabei, wenn das Teil abnehmbar ausgestaltet ist, an dem der Berstkörper 8 und die Druckableitung 7 vorhanden sind. Diese Ausgestaltung erleichtert das Aufbringen eines neuen Berstkörpers 8 auf der Innenfläche 6 des Teils 24 von innen auf die Wand 5.

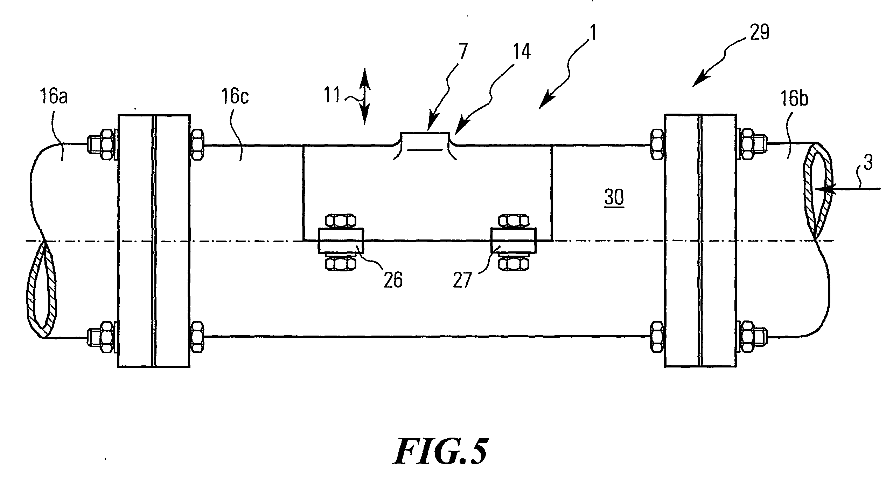

In Fig. 4 ist die Bersteinrichtung im Wesentlichen diametral geteilt. Anstelle einer solchen diametralen Teilung kann das eine Teil 24 sich auch über einen größeren oder kleineren Winkel als 180° erstrecken (vgl. Fig. 5).

Fig. 5 zeigt ein viertes Ausführungsbeispiel, das dem Ausführungsbeispiel der Fig. 4 weitgehend ähnelt. In Fig. 5 ist eine Außenansicht eines Rohrleitungssystems 29 mit mehreren Rohrleitungsstücken 16a, 16b, 16c dargestellt. Das Rohrleitungssystem 29 kann auch als Apparatesystem ausgestaltet sein, das weitere in Fig. 5 nicht gezeigte Apparate aufweist, die durch Rohrleitungsstücke miteinander verbunden sind. Derartige Apparate zum Transport des Fluids umfassen beispielsweise Druckausgleichsbehälter, Siebanlagen, Pumpen und Heizvorrichtungen.

In einem Rohrleitungsstück 16c ist ein Bersteinsatz gezeigt, der über Flansche 26, 27 am Rohrleitungsstück 16c in Richtung quer zur Durchleitungsrichtung 3, in Pfeilrichtung 11 wiederholt aus- und einbaubar ist. Das Rohrleitungsstück 16c entspricht dabei im wesentlichen dem Teil 25 der Fig. 4.

Der Bersteinsatz 1 gemäß dem Ausführungsbeispiel der Fig. 5 bildet lediglich einen Teil der Wand 30 des Rohrleitungsstücks 16c aus. In diesem entfernbaren Wandabschnitt ist die Druckableitung 7 angeordnet, gemäß Ausführungsbeispiel der Fig. 5 an einem Absatz 14.

Beim Ausführungsbeispiel der Fig. 5 kann somit auf einen separaten, zwischen zwei Rohrleitungsstücken 16a, 16b angeordneten Bersteinsatz zugunsten eines an einem bereits vorhandenen Rohrleitungsstücks 16c angebrachten Bersteinsatzes verzichtet werden.

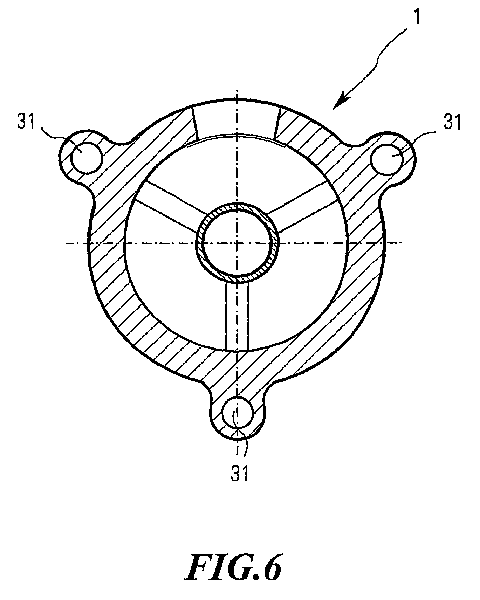

Fig. 6 schließlich zeigt ein fünftes und letztes Ausführungsbeispiel eines erfindungsgemäßen Bersteinsatzes 1, das sich von den zuvor beschriebenen Ausführungsbeispielen lediglich durch eine Zentriervorrichtung 31 unterscheidet.

Zum Abschluss wird noch kurz auf die Funktion des erfindungsgemäßen Bersteinsatzes 1 eingegangen, die bei allen Ausführungsbeispielen im wesentlichen gleich ist.

Der Bersteinsatz 1 gemäß einem der oben beschriebenen Ausführungsbeispiele eignet sich insbesondere zum Fördern von exotherm reagierenden Fluiden, wie beispielsweise synthetischen Polymeren, Cellulosederivaten oder Lösungen aus Cellulose, Wasser und Aminoxid. Insbesondere eignet sich der erfindungsgemäße Bersteinsatz 1 für Spinnlösungen enthaltend Cellulose, Wasser und tertiäres Aminoxid, wobei als Aminoxid vorzugsweise N-Methylmorpholin-N-oxid verwendet wird. Außerdem können Stabilisatoren sowie weitere Additive, wie eingangs bereits beschrieben, verwendet werden.

Derartige Fluide neigen zu einer spontanen exothermen Reaktion, wodurch der Druck im Inneren des Rohrleitungssystems 29 steigt. Um Beschädigungen an Gerätschaften, die mit dem Rohrleitungssystem 29 verbunden sind, wie beispielsweise Pumpen, Spinndüsen, Druckausgleichsbehälter etc., zu vermeiden, sind in periodischen Abständen im Rohrleitungssystem 29 Bersteinsätze 1 vorgesehen. Die Berstkörper 8 sind dabei so konzipiert, dass sie bei Überschreiten eines bestimmten Reaktionsdruckes im Durchleitungsvolumen 2, dem Berstdruck, sich verformen oder brechen und die Druckableitung 7 mit dem Durchleitungsvolumen 2 verbinden. Auf diese Weise kann der Reaktionsdruck durch die Druckableitung 7 strömungsgünstig abgelassen werden.

Bei einer exothermen Reaktion des Fluid entstehen Reaktionsprodukte, die fest, flüssig oder gasförmig sein können. Diese Reaktionsprodukte stellen Abfallprodukte dar, die im Berstfall mit dem Fluid durch die Druckableitung 7 gespült werden. Die austretenden festen, flüssigen oder gasförmigen Abfallprodukte werden zu Rückgewinnungs- oder Reinigungsanlagen, die mit der Druckableitung 7 bzw. mehreren Druckableitungen 7 von mehreren Bersteinsätzen in einem Rohrleitungs- oder Apparatesystem verbunden sind, weitergeleitet, wo sie dann aus dem Fluid entfernt werden.

Die vorliegende Erfindung setzt dann ein, wenn der Berstfall eingetreten ist und eine Berstscheibe ausgetauscht werden muss. Erfindungsgemäß wird der Bersteinsatz 1 aus dem Rohrleitungssystem ausgebaut, ohne dass am Rohrleitungssystem 29 oder den beiden an den Bersteinsatz grenzenden Rohrleitungsstücken 16a, 16b Änderungen vorgenommen werden müssen. Hierzu kann entweder der gesamte Bersteinsatz 1 aus dem Rohrleitungssystem 29 als ein vollständig das Durchleitungsvolumen umgebender Rohrabschnitt herausgenommen werden, wie bei den Ausführungsbeispielen der Fig. 1 und 2, oder aber lediglich ein Teil der das Durchleitungsvolumen 2 begrenzenden Wand 5, wie bei den Ausführungsbeispielen der Fig. 4 und 5.

Durch die einfache Herausnehmbarkeit des Bersteinsatzes 1 kann der Berstkörper 8 von innen an die Innenfläche 6 der Wand 5 angebracht werden. Dadurch ist eine besonders stabile Abstützung und Zentrierung des Berstkörpers 8 möglich und der vorbestimmte Berstdruck kann genau eingehalten werden. Außerdem kann bei herausgenommenem Bersteinsatz 1 das Durchleitungsvolumen 2 des Rohrleitungssystems 29 leicht inspiziert werden, da die die Druckableitung 7 umgebende Wand mit ausgebaut wird und eine große Zugangsöffnung entsteht.

## Patentansprüche

1. Bersteinsatz (1) zum Einbau in ein Rohrleitungs- bzw. Apparatesystem (29) für den Transport eines spontan exotherm reagierenden Fluids, wie eines synthetischen Polymers oder einer Polymerlösung, eines Zellulosederivats oder einer Lösung aus Zellulose, Wasser und Aminoxid sowie Mischungen davon, mit einer Wand (5), die ein vom Fluid in einer Durchleitungsrichtung (3) durchströmtes Durchleitungsvolumen (2) wenigstens teilweise außen umgibt, mit einer aus dem Durchleitungsvolumen führenden Druckableitung (7), und mit einem die Druckableitung gegenüber dem Durchleitungsvolumen verschließenden Berstkörper (8), der bei Überschreiten eines vorbestimmten Berstdruckes in einen Zustand überführbar ist, in dem das Durchleitungsvolumen und die Druckableitung fluidleitend miteinander verbunden sind, **dadurch gekennzeichnet, dass** der Bersteinsatz (1) als ein zum Austausch des Berstkörpers (8) ein- und ausbaubares Rohrleitungsmodul ausgestaltet ist, dass die Druckableitung (7) im Wesentlichen als eine in der Wand (5) ausgebildete Öffnung ausgestaltet ist und dass der Berstkörper (8) lösbar an der Innenfläche (6) der Wand (5) angebracht ist.

2. Bersteinsatz (1) nach Anspruch 1, **dadurch gekennzeichnet, dass** der Berstkörper (8) von innen an der Wand (5) befestigt ist.

3. Bersteinsatz (1) nach Anspruch 1 oder 2, **dadurch gekennzeichnet, dass** der Berstkörper (8) in einem die Druckableitung (7) umgebenden Bereich (12) der Wand befestigt ist.

4. Bersteinsatz (1) nach einem der oben genannten Ansprüche, **dadurch gekennzeichnet, dass** die Grundfläche des Berstkörpers (8) größer ist als der Strömungsquerschnitt der Druckableitung.

5. Bersteinsatz (1) nach einem der oben genannten Ansprüche, **dadurch gekennzeichnet, dass** der Berstkörper (8) zumindest abschnittsweise mit der Wand im wesentlichen fluchtet.

6. Bersteinsatz (1) nach einem der oben genannten Ansprüche, **dadurch gekennzeichnet, dass** der Berstkörper (8) einen Teil der das Durchleitungsvolumen (2) begrenzenden Wand (5) bildet.

7. Bersteinsatz (1) nach einem der oben genannten Ansprüche, **dadurch gekennzeichnet, dass** der Berstkörper (8) in Durchleitungsrichtung (3) im wesentlichen scheibenförmig ausgestaltet ist.

8. Bersteinsatz (1) nach Anspruch 7, **dadurch gekennzeichnet, dass** die Berstscheibe (8) in Durchleitungsrichtung (3) im wesentlichen gewölbt ist.

9. Bersteinsatz (1) nach Anspruch 7 oder 8, **dadurch gekennzeichnet, dass** die Berstscheibe (8) einen im wesentlichen kalottenförmigen Abschnitt aufweist.

10. Bersteinsatz (1) nach einem der Ansprüche 7 bis 9, **dadurch gekennzeichnet, dass** sich die Berstscheibe (8) in die Druckableitung wölbt.

11. Bersteinsatz (1) nach einem der oben genannten Ansprüche, **dadurch gekennzeichnet, dass** die Wand (5) im Bereich der Druckableitung einen in das Fluid ragenden Ansatz (12a) ausbildet, auf dem die Berstscheibe (8) angebracht ist.

12. Bersteinsatz (1) nach einem der oben genannten Ansprüche, **dadurch gekennzeichnet, dass** der Ansatz (12a) eine im wesentlichen plane Auflagefläche (12) für den Berstkörper aufweist.

13. Bersteinsatz (1) nach einem der oben genannten Ansprüche , **dadurch gekennzeichnet, dass** der Strömungsquerschnitt des Durchleitungsvolumens (2) im Bereich der Berstscheibe (8) verringert ist.

14. Bersteinsatz (1) nach Anspruch 12 oder 13, **dadurch gekennzeichnet, dass** sich der Strömungsquerschnitt im Bereich des Bersteinsatzes (8) zum Ansatz (12a) hin kontinuierlich verringert.

15. Bersteinsatz (1) nach einem der oben genannten Ansprüche, **dadurch gekennzeichnet, dass** ein Zentralkörper (17) vorgesehen ist, der im Bereich der Mittenströmung im Durchleitungsvolumen (2) angeordnet ist und durch den die Mittelströmung des Fluids ersetzt ist.

16. Bersteinsatz (1) nach Anspruch 15, **dadurch gekennzeichnet, dass** der Zentralkörper (17) als ein Fluidleitungssystem ausgestaltet ist, durch das ein zweites Fluid getrennt vom ersten Fluid durchleitbar ist.

17. Bersteinsatz (1) nach einem der oben genannten Ansprüche, **dadurch gekennzeichnet, dass** die Länge des Bersteinsatzes (1) in Durchleitungsrichtung (3) kleiner ist als die lichte Weite des Durchleitungsvolumens (2).

18. Bersteinsatz (1) nach einem der oben genannten Ansprüche , **dadurch gekennzeichnet, dass** die Länge des Bersteinsatzes (1) in Durchleitungsrichtung (3) höchstens dem dreifachen Durchmesser des Berstkörpers (8) oder der Druckabteilung (7) entspricht.

19. Bersteinsatz (1) nach einem der oben genannten Ansprüche, **dadurch gekennzeichnet, dass** der Bersteinsatz (1) in einer quer zur Durchleitungsrichtung (3) verlaufenden Ebene teilbar ausgestaltet ist.

20. Bersteinsatz (1) nach einem der oben genannten Ansprüche, **dadurch gekennzeichnet, dass** der Bersteinsatz (1) als ein lediglich einen Teil des Durchleitungsvolumens (2) eines Rohrleitungsstückes (16a, 16b, 16c) des Rohrleitungssystems (29) umgebender, in einer Richtung quer zur Durchleitungsrichtung (3) auf das Rohrleitungsstück aufsetzbarer Rohrabschnitt ausgestaltet ist.

21. Modulares Rohrleitungs- bzw. Apparatesystem (29) zur Durchleitung eines spontan exotherm reagierenden Fluids, wie eines synthetischen Polymers oder einer Polymerlösung, eines Cellulosederivats oder einer Lösung aus Cellulose, Wasser und Aminoxid sowie Mischungen davon, mit wenigstens einem Rohrleitungsstück, **gekennzeichnet durch** einen Bersteinsatz nach einem der oben genannten Ansprüche.

22. Modulares Rohrleitungssystem bzw. Apparatesystem (29) nach Anspruch 21, **dadurch gekennzeichnet, dass** die Durchleitungsvolumina (2) des wenigstens einen Rohrleitungsstückes (16a, 16b, 16c) und des Bersteinsatzes (1) im zusammengesetzten Zustand im wesentlichen stoßfrei ineinander übergehen.

23. Modulares Rohrleitungsstück bzw. Apparatesystem (29) nach Anspruch 21 oder 22, **dadurch gekennzeichnet, dass** das wenigstens eine Rohrleitungsstück (16a, 16b, 16c) mit einem Zentralkörper (20) versehen ist.

24. Modulares Rohrleitungssystem bzw. Apparatesystem (29) nach einem der Ansprüche 21 bis 23, **dadurch gekennzeichnet, dass** das wenigstens eine Rohrleitungsstück (16a, 16b, 16c) und der Bersteinsatz (1) an ihren in Durchleitungsrichtung (3) gelegenen Enden mit einander entsprechend ausgestalteten Flanschen versehen sind.

25. Modulares Rohrleitungssystem bzw. Apparatesystem (29) nach einem der Ansprüche 21 bis 24, **dadurch gekennzeichnet, dass** eine Reinigungsvorrichtung vorgesehen ist, die an die Druckableitung (7) angeschlossen ist, und durch die Abfallprodukte einer exothermen Reaktion des durch die Druckableitung (7) geleiteten Fluids aus dem Fluid entfernbar sind.

## Claims

1. A bursting insert (1) for installation in a pipeline or apparatus system (29) for transporting a fluid showing a spontaneous exothermic reaction, for instance a synthetic polymer or a polymer solution, a cellulose derivative or a solution of cellulose, water and amine oxide, as well as mixtures thereof, comprising a wall (5) which surrounds, at least in part on the outside, a passage volume (2) having the fluid flowing therethrough in a passage direction (3), comprising a pressure discharge line (7) extending out of the passage volume, and a bursting body (8) which seals the pressure discharge line relative to the passage volume and which, when a predetermined bursting pressure is exceeded, can be transferred into a state in which the passage volume and the pressure discharge line are interconnected in fluid-conducting fashion, **characterized in that** the bursting insert (1) is designed as a pipeline module which can be installed and dismounted for replacing the bursting body (8), that the pressure discharge line (7) is essentially designed as an opening formed in the wall (5), and that the bursting body (8) is detachably mounted on the inner surface (6) of the wall.

2. The bursting insert (1) according to claim 1, **characterized in that** the bursting body (8) is mounted from the inside on the wall (5).

3. The bursting insert (1) according to claim 1 or 2, **characterized in that** the bursting body (8) is mounted in an area (12) of the wall surrounding the pressure discharge line (7).

4. The bursting insert (1) according to any one of the aforementioned claims, **characterized in that** the basic surface of the bursting body (8) is larger than the flow cross-section of the pressure discharge line (7).

5. The bursting insert (1) according to any one of the aforementioned claims, **characterized in that** the bursting body (8) is substantially in alignment with the wall at least sectionwise.

6. The bursting insert (1) according to any one of the aforementioned claims, **characterized in that** the bursting body (8) forms part of the wall (5) defining the passage volume (2).

7. The bursting insert (1) according to any one of the aforementioned claims, **characterized in that** the bursting body (8) is designed essentially in the form of a disc in passage direction (3).

8. The bursting insert (1) according to claim 7, **characterized in that** the bursting disc (8) is essentially curved in passage direction (3).

9. The bursting insert (1) according to claim 7 or 8, **characterized in that** the bursting disc (8) has a section essentially shaped as a spherical cap.

10. The bursting insert (1) according to any one of claims 7 to 9, **characterized in that** the bursting disc (8) curves into the pressure discharge line.

11. The bursting insert (1) according to any one of the aforementioned claims, **characterized in that** the wall (5) in the area of the pressure discharge line forms an attachment (12a) projecting into the fluid, on which the bursting disc (8) is mounted.

12. The bursting insert (1) according to any one of the aforementioned claims, **characterized in that** the attachment (12a) has a substantially planar support surface (12) for the bursting body.

13. The bursting insert (1) according to any one of the aforementioned claims, **characterized in that** the flow cross-section of the passage volume (2) is reduced in the area of the bursting disc (8).

14. The bursting insert (1) according to claim 12 or 13, **characterized in that** the flow cross-section in the area of the bursting insert (8) is reduced continuously towards the attachment (12a).

15. The bursting insert (1) according to any one of the aforementioned claims, **characterized in that** a central body (17) is provided that is arranged in the area of the center flow in passage volume (2), and by which the center flow of the fluid is replaced.

16. The bursting insert (1) according to claim 15, **characterized in that** the central body (17) is designed as a fluid line system through which a second fluid can be passed separated from the first fluid.

17. The bursting insert (1) according to any one of the aforementioned claims, **characterized in that** the length of the bursting insert (1) in passage direction (3) is smaller than the clear width of the passage volume (2).

18. The bursting insert (1) according to any one of the aforementioned claims, **characterized in that** the length of the bursting insert (1) in passage direction (3) is not more than three times the diameter of the bursting body (8) or the pressure discharge line (7).

19. The bursting insert (1) according to any one of the aforementioned claims, **characterized in that** the bursting insert (1) is made dividable in a plane extending in a direction transverse to the passage direction (3).

20. The bursting insert (1) according to any one of the aforementioned claims, **characterized in that** the bursting insert (1) is designed as a pipe section which just surrounds part of the passage volume (2) of a pipeline member (16a, 16b, 16c) of the pipeline system (29) and which can be mounted on the pipeline member in a direction transverse to the passage direction (3).

21. A modular pipeline or apparatus system (29) for passing therethrough a fluid showing a spontaneous exothermic reaction, such as a synthetic polymer or a polymer solution, a cellulose derivative or a solution consisting of cellulose, water and amine oxide, as well as mixtures thereof, comprising at least one pipeline member, **characterized by** a bursting insert according to any one of the aforementioned claims.

22. The modular pipeline system or apparatus system (29) according to claim 23, **characterized in that** the passage volumes (2) of the at least one pipeline member (16a, 16b, 16c) and of the bursting insert (1) in the assembled state pass into one another essentially smoothly.

23. The modular pipeline system or apparatus system (29) according to claim 21 or 22, **characterized in that** the at least one pipeline member (16a, 16b, 16c) is provided with a central body (20).

24. The modular pipeline system or apparatus system (29) according to any one of claims 21 to 23, **characterized in that** the at least one pipeline member (16a, 16b, 16c) and the bursting insert (1) are provided on their ends situated in passage direction (3) with correspondingly mating flanges.

25. The modular pipeline system or apparatus system (29) according to any one of claims 21 to 24, **characterized in that** a cleaning device is provided that is connected to the pressure discharge line (7), and by which the waste products of an exothermic reaction of the fluid passed through the pressure discharge line (7) can be removed from the fluid.

## Revendications

1. Garniture de rupture (1) pour l'intégration dans un système de tuyauterie ou d'appareillage (29) pour le transport d'un fluide à réaction exothermique spontanée, tel qu'un polymère synthétique ou une solution polymère, un dérivé de cellulose ou une solution à base de cellulose, eau et oxyde aminé ainsi que des mélanges de ceux-ci, comportant une paroi (5) qui entoure au moins partiellement à l'extérieur un volume de passage (2) traversé par le fluide dans une direction de passage (3), comportant une conduite d'évacuation de pression (7) menant hors du volume de passage et comportant un corps de rupture (8) refermant la conduite d'évacuation de pression par rapport au volume de passage, corps qui, lors du dépassement d'une pression de rupture prédéterminée, est transférable en un état dans lequel le volume de passage et la conduite d'évacuation de pression sont reliés l'un à l'autre de manière à conduire le fluide, **caractérisée en ce que** la garniture de rupture (1) est réalisée sous la forme d'un module de tuyauterie susceptible d'être monté et démonté pour échanger le corps de rupture (8), **en ce que** la conduite d'évacuation de pression (7) est réalisée sensiblement sous la forme d'une ouverture ménagée dans la paroi (5), et **en ce que** le corps de rupture (8) est agencé de façon détachable sur la surface intérieure (6) de la paroi (5).

2. Garniture de rupture (1) selon la revendication 1, **caractérisée en ce que** le corps de rupture (8) est fixé de l'intérieur sur la paroi (5).

3. Garniture de rupture (1) selon la revendication 1 ou 2, **caractérisée en ce que** le corps de rupture (8) est fixé dans une zone (12) de la paroi, qui entoure la conduite d'évacuation de pression (7).

4. Garniture de rupture (1) selon l'une des revendications précédentes, **caractérisée en ce que** la surface de base du corps de rupture (8) est supérieure à la section transversale d'écoulement de la conduite d'évacuation de pression.

5. Garniture de rupture (1) selon l'une des revendications précédentes, **caractérisée en ce que** le corps de rupture (8) est au moins localement sensiblement en alignement avec la paroi.

6. Garniture de rupture (1) selon l'une des revendications précédentes, **caractérisée en ce que** le corps de rupture (8) forme une partie de la paroi (5) délimitant le volume de passage (2).

7. Garniture de rupture (1) selon l'une des revendications précédentes, **caractérisée en ce que** le corps de rupture (8) est réalisé sensiblement en forme de disque en direction de passage (3).

8. Garniture de rupture (1) selon la revendication 7, **caractérisée en ce que** le disque de rupture (8) est sensiblement bombé en direction de passage (3).

9. Garniture de rupture (1) selon la revendication 7 ou 8, **caractérisée en ce que** le disque de rupture (8) comprend une portion sensiblement en forme de calotte.

10. Garniture de rupture (1) selon l'une des revendications 7 à 9, **caractérisée en ce que** le disque de rupture (8) se bombe dans la conduite d'évacuation de pression.

11. Garniture de rupture (1) selon l'une des revendications précédentes, **caractérisée en ce que** la paroi (5) forme, dans la zone de la conduite d'évacuation de pression, un talon (12a) pénétrant dans le fluide et sur lequel est agencé le disque de rupture (8).

12. Garniture de rupture (1) selon l'une des revendications précédentes, **caractérisée en ce que** le talon (12a) comprend une surface d'appui (12) sensiblement plane pour le corps de rupture.

13. Garniture de rupture (1) selon l'une des revendications précédentes, **caractérisée en ce que** la section transversale d'écoulement du volume de passage (2) est réduite dans la zone du disque de rupture (8).

14. Garniture de rupture (1) selon la revendication 12 ou 13, **caractérisée en ce que** la section transversale d'écoulement se réduit en continu vers le talon (12a) dans la zone de la garniture de rupture (8).

15. Garniture de rupture (1) selon l'une des revendications précédentes, **caractérisée en ce qu'**il est prévu un corps central (17) qui est agencé dans la zone de l'écoulement médian dans le volume de passage (2) et qui remplace l'écoulement médian du fluide.

16. Garniture de rupture (1) selon la revendication 15, **caractérisée en ce que** le corps central (17) est réalisé sous la forme d'un système de conduite de fluide à travers lequel peut passer un second fluide en étant séparé du premier fluide.

17. Garniture de rupture (1) selon l'une des revendications précédentes, **caractérisée en ce que** la longueur de la garniture de rupture (1) en direction de passage (3) est inférieure à la largeur libre du volume de passage (2).

18. Garniture de rupture (1) selon l'une des revendications précédentes, **caractérisée en ce que** la longueur de la garniture de rupture (1) en direction de passage (3) correspond au maximum au triple du diamètre du corps de rupture (8) ou de la conduite d'évacuation de pression (7).

19. Garniture de rupture (1) selon l'une des revendications précédentes, **caractérisée en ce que** la garniture de rupture (1) est réalisée divisible dans un plan s'étendant transversalement à la direction de passage (3).

20. Garniture de rupture (1) selon l'une des revendications précédentes, **caractérisée en ce que** la garniture de rupture (1) est réalisée sous la forme d'un tronçon tubulaire entourant seulement une partie du volume de passage (2) d'un tronçon de tuyauterie (16a, 16b, 16c) du système de tuyauterie (29) et susceptible d'être rapporté sur le tronçon de tuyauterie dans une direction transversale à la direction de passage (3).

21. Système modulaire de tuyauterie ou d'appareillage (29) pour faire passer un fluide à réaction exothermique spontanée, tel qu'un polymère synthétique ou une solution polymère, un dérivé de cellulose ou une solution à base de cellulose, eau et oxyde aminé ainsi que des mélanges de ceux-ci, comportant au moins un tronçon de tuyauterie, **caractérisé par** une garniture de rupture selon l'une des revendications précédentes.

22. Système modulaire de tuyauterie ou d'appareillage (29) selon la revendication 21, **caractérisé en ce que** les volumes de passage (2) dudit au moins un tronçon de tuyauterie (16a, 16b, 16c) et de la garniture de rupture (1) se transforment l'un vers l'autre sensiblement sans jointure dans l'état assemblé.

23. Système modulaire de tuyauterie ou d'appareillage (29) selon la revendication 21 ou 22, **caractérisé en ce que** ledit au moins un tronçon de tuyauterie (16a, 16b, 16c) est pourvu d'un corps central (20).

24. Système modulaire de tuyauterie ou d'appareillage (29) selon l'une des revendications 21 à 23, **caractérisé en ce que** ledit au moins un tronçon de tuyauterie (16a, 16b, 16c) et la garniture de rupture (1) sont pourvus, à leurs extrémités situées en direction de passage (3), de brides réalisées de manière à se correspondre.

25. Système modulaire de tuyauterie ou d'appareillage (29) selon l'une des revendications 21 à 24, **caractérisé en ce qu'**il est prévu un dispositif de nettoyage qui est raccordé à la conduite d'évacuation de pression (7) et à travers lequel des déchets d'une réaction exothermique du fluide mené à travers la conduite d'évacuation de pression (7) peuvent être enlevés hors du fluide.
